# FASCICULE DE BREVET EUROPEEN

(11) **EP 2 121 353 B1**
(45) Date de publication et mention de la délivrance du brevet: **30.06.2010**
(21) Numéro de dépôt: 07857816.8
(22) Date de dépôt: 19.12.2007
(51) Int. Cl.: B60C 13/00, B60C 9/09

(54) **ARMATURE ADDITIONNELLE DE FLANC DE PNEUMATIQUE POIDS LOURD**
ZUSÄTZLICHE SEITENWANDVERSTÄRKUNG FÜR EINEN REIFEN FÜR EIN SCHWER-NUTZFAHRZEUG
ADDITIONAL SIDEWALL ARMATURE FOR A HEAVY GOODS VEHICLE TYRE

(30) Priorité: 17.01.2007 FR 0700340
(43) Date de publication de la demande: 25.11.2009
(73) Titulaire: Société de Technologie MICHELIN, 63000 Clermont-Ferrand (FR); Michelin Recherche et Technique S.A., 1763 Granges-Paccot (CH)
(72) Inventeur: VAN DEN NIEUWENHUYZEN, Karl, F-63140 Chatelguyon (FR); ESNAULT, Philippe, F-63000 Clermont-Ferrand (FR); COGNE, Michael, F-63200 Riom (FR)
(74) Mandataire: Diernaz, Christian
(86) Numéro de dépôt international: PCT/EP2007/064193
(87) Numéro de publication internationale: WO 2008/098639

(56) Documents cités:
- EP-A- 0 038 019
- WO-A-02/096674
- GB-A- 1 072 305
- JP-A- 1 067 405
- JP-A- 4 201 611
- JP-A- 5 058 119
- JP-A- 62 001 605
- US-A- 5 392 830

## Description

L'invention concerne les pneumatiques à armature de carcasse métallique et plus particulièrement le renforcement de tels pneumatiques dans leurs flancs.

De façon usuelle, les pneumatiques destinés à des utilisations sur véhicules poids lourd comprennent une armature de carcasse formée d'au moins une nappe de renforts métalliques enrobés dans un matériau caoutchouc, cette armature ayant en autre pour rôle de résister à la pression interne de gonflage du pneumatique. Cette armature de carcasse est ancrée à ses extrémités dans des bourrelets de pneumatique destinés à venir en contact avec des sièges d'une jante de montage. L'ancrage de l'armature de carcasse peut notamment être réalisé par enroulement autour de renfort circonférentiel de bourrelet comme une tringle. Une armature de carcasse est dite radiale dans le présent document dès lors que les renforts qui la composent font un angle moyen supérieur à 75 degrés avec la direction circonférentielle.

Par ailleurs, le pneumatique comprend, radialement au delà des bourrelets, des zones de flanc subissant des cycles de variations de courbure pendant le roulage à chaque passage dans le contact avec la chaussée. L'armature de carcasse est par ailleurs surmontée par une armature de sommet formée généralement par plusieurs nappes de renforts croisés entre eux, cette armature de sommet étant elle-même radialement surmontée à l'extérieur par une bande de roulement destinée à être en contact avec la chaussée pendant le roulage du pneumatique.

En cours de roulage, les flancs du pneumatique, et par voie de conséquence l'armature de carcasse, sont soumis à des cycles de variations de courbure. Ces sollicitations cycliques de flexion des renforts de l'armature de carcasse sont amplifiées quand le pneumatique est partiellement, voire totalement, dégonflé : d'une part, l'amplitude entre le rayon de courbure maximal et le rayon de courbure minimal augmente et d'autre part la valeur du rayon minimal de courbure diminue.

Ce mécanisme peut intervenir par exemple dans le cas d'un usage de pneumatiques en monte jumelée, l'un des pneumatiques étant partiellement ou totalement dégonflé et l'autre restant gonflé. Dans ce cas, l'armature de carcasse du pneumatique dégonflé est soumise à une tension faible ou nulle, compte tenu de l'absence de pression de gonflage, tout en étant soumise à des variations de courbure. Ces cycles de fortes flexions, alors que les renforts de l'armature de carcasse ne sont pas tendus, génèrent une fatigue des renforts métalliques de l'armature de carcasse.

Cette fatigue des renforts métalliques diminue leur résistance à la rupture sous tension et peut conduire à des éclatement au moment du regonflage du pneumatique à sa pression nominale après réparation notamment. Ce problème est connu sous le nom de "*zipper failure*" ou rupture en "boutonnière". L'éclatement s'accompagne d'une rupture s'étendant sur une plus ou moins grande longueur circonférentielle dans l'un des flancs. Avec cet éclatement, une onde de surpression se propage au voisinage du pneumatique. Le document JP-A- 62-001605 décrit les caractéristiques du préambule de la revendication 1.

La présente invention cherche non à réduire la fatigue des renforts métalliques mais plutôt à limiter l'onde de surpression résultant d'un éclatement au moment du regonflage d'un pneumatique dont l'armature de carcasse aurait subi une fatigue de ses renforts métalliques.

Un objectif de cette invention est de limiter la surpression au voisinage du pneumatique résultant de la libération d'énergie au moment de la propagation de la rupture de l'armature de carcasse.

Dans ce but, il est proposé un pneumatique comprenant une armature de carcasse radiale surmontée radialement à l'extérieur par une armature de sommet, l'armature de carcasse étant formée par une pluralité de renforts métalliques enrobés dans un matériau d'enrobage en caoutchouc, les renforts de l'armature de carcasse faisant un angle au moins supérieur à 75° avec la direction circonférentielle, le pneumatique comprenant en outre des bourrelets pour être en contact avec une jante de montage, l'armature de carcasse étant ancrée dans ces bourrelets. Le pneumatique comprend deux flancs, chaque flanc s'étendant entre un bourrelet et le sommet, au moins l'un des flancs comprenant une armature additionnelle de renfort. Ce pneumatique est **caractérisé en ce que** l'armature additionnelle comprend dans le sens circonférentiel une pluralité de premières parties et une pluralité de deuxièmes parties ayant des résistances à la rupture, c'est-à-dire des forces à rupture par unité de largeur d'armature, telles que la résistance à la rupture des deuxièmes parties est inférieure à la résistance à la rupture des premières parties, les premières parties et les deuxièmes parties étant disposées en alternance dans la direction circonférentielle. La force de rupture par unité de largeur d'une armature correspond à la force qu'il est nécessaire d'appliquer dans une direction donnée et sur une unité de largeur de l'armature afin de provoquer la rupture de ladite armature sensiblement perpendiculairement à la direction de la force appliquée.

Selon cette invention, l'armature additionnelle comportant une succession de premières parties et de deuxièmes parties ayant des résistances à la rupture différentes, forme une sorte de barrière à la propagation, dans la direction circonférentielle, de la rupture des renforts de l'armature de carcasse, en limitant la longueur circonférentielle totale de l'ouverture. Il a été constaté de manière surprenante qu'en réduisant significativement la longueur circonférentielle de l'ouverture du flanc du pneumatique, il est possible de diminuer l'effet de souffle produit par l'éclatement du pneumatique.

Préférentiellement, l'armature additionnelle s'étend dans l'un au moins des flancs entre un point situé radialement à l'intérieur du point axialement le plus à l'extérieur du profil de l'armature de carcasse du pneumatique monté sur sa jante de montage et gonflé à sa pression d'usage, et un point situé au voisinage de l'extrémité axiale de l'armature de sommet. Ce flanc est préférentiellement positionné sur le côté extérieur d'un véhicule sur lequel le pneumatique est monté.

Dans une variante préférentielle, l'armature additionnelle est formée par une nappe de renforts textiles aptes à résister aux cycles de flexion que subit l'armature de carcasse ; par aptes à résister aux cycles de flexion, on entend que ces renforts conservent sensiblement leur résistance à la rupture à l'état initial. Pour former des premières parties, de plus grande résistance à la rupture, on peut employer des renforts textiles de plus forte résistance à la rupture que celles des renforts textiles des deuxièmes parties. Ces renforts textiles peuvent être orientés dans la direction méridienne, c'est-à-dire dans un plan contenant l'axe de rotation du pneumatique, ou encore dans toute autre direction.

Dans une autre variante préférentielle, l'armature additionnelle ne comporte qu'une pluralité de premières parties, formées chacune par une nappe de renforts textiles, et disjointes les unes des autres dans la direction circonférentielle. Les renforts textiles sont disposés radialement sur le pneumatique c'est-à-dire selon une direction faisant un angle égal à 90 degrés avec la direction circonférentielle sur le pneumatique L'espace entre deux premières parties correspond à une deuxième partie de résistance à la rupture égale à zéro. Ces deuxièmes parties ne comportent aucun élément de renfort ni même de mélange de caoutchouc. Cette variante est particulièrement adaptée au cas où les premières parties comprennent des renforts métalliques.

Dans une autre variante, les deuxièmes parties peuvent être constituée par le même mélange de caoutchouc que celui des premières parties afin de faciliter la pose de l'armature additionnelle en cours de fabrication du pneumatique.

Dans une autre variante, l'armature additionnelle est une nappe en mélange de caoutchouc renforcée par des renforts textiles parallèles les uns aux autres, ces renforts textiles étant coupés au moins en un endroit de leur longueur sur une pluralité de régions de ladite nappe. Par région, on entend ici que sur une largeur donnée de la nappe correspondant à la largeur de ladite région (et mesurée perpendiculairement aux renforts de l'armature additionnelle), les renforts sont tous coupés de manière à créer, dans ladite armature additionnelle, une deuxième partie de faible résistance à la rupture. Préférentiellement, la au moins une coupure réalisée sur un renfort est localisée de manière à être située dans le flanc du pneumatique dans la région dudit flanc correspondant au point de l'armature de carcasse axialement le plus à l'extérieur (axialement à l'extérieur étant pris par référence à la cavité interne du pneumatique) voire radialement vers l'extérieur de ce point.

On peut également prévoir que l'armature additionnelle est renforcée dans ces deuxièmes parties de faible résistance à la rupture par des renforts discontinus. Ces discontinuités peuvent aisément être obtenues après confection de l'armature additionnelle avec des renforts continus en coupant en plusieurs endroits chacun des renforts pour constituer des deuxièmes parties.

Dans une autre variante de réalisation, l'armature additionnelle est une nappe en mélange de caoutchouc renforcée d'une succession de renforts de natures différentes ayant des résistances à la rupture différentes, ces renforts étant disposés sensiblement parallèlement les uns aux autres. Les renforts de même nature sont groupés de manière à constituer des parties de longueur moyenne circonférentielle appropriée. Ces parties de résistances à la rupture sont disposées en alternance dans la direction circonférentielle.

Préférentiellement les renforts textile de l'armature additionnelle sont choisis parmi les renforts polyamide ou aramide ; il peuvent également être de nature hybride, c'est-à-dire formés avec au moins deux câblés textiles de natures différentes.

Si l'armature additionnelle peut être indifféremment positionnée d'un côté ou de l'autre de l'armature de carcasse, il peut toutefois être avantageux la positionner axialement et radialement à l'extérieur de l'armature de carcasse (ladite armature de carcasse se trouve en conséquence entre l'armature additionnelle et la cavité interne du pneumatique dans laquelle agit la pression de gonflage du pneumatique). Il est en outre possible de prévoir un matériau de découplage entre l'armature de carcasse et l'armature additionnelle.

Dans toutes les variantes présentées employant des renforts, il est avantageux que ces renforts de l'armature additionnelle fassent sur le pneumatique un angle égal ou peu différent de 90 degrés (c'est-à-dire au moins 80 degrés) avec la direction circonférentielle.

D'autres caractéristiques et avantages de l'invention ressortent de la description faite ci-après en référence aux dessins annexés qui montrent, à titre d'exemples non limitatifs, des formes de réalisation de l'objet de l'invention.

Figure 1 : vue partielle d'un flanc d'un pneumatique à armature de carcasse radiale après test d'éclatement ;

Figure 2 : vue en coupe méridienne d'un pneumatique selon l'art antérieur ;

Figure 3 : vue en coupe méridienne d'un pneumatique selon l'invention ;

Figure 4 : vue partielle d'un flanc du pneumatique de la figure 3 ;

Figure 5 : vue partielle du flanc du pneumatique de la figure 3 après test d'éclatement ;

Figure 6 : vue d'une variante d'armature additionnelle ;

Figure 7 : vue d'une autre variante d'armature additionnelle ;

Figure 8 : vue d'une autre variante d'armature additionnelle ;

Figure 9 : vue d'une autre variante d'armature additionnelle.

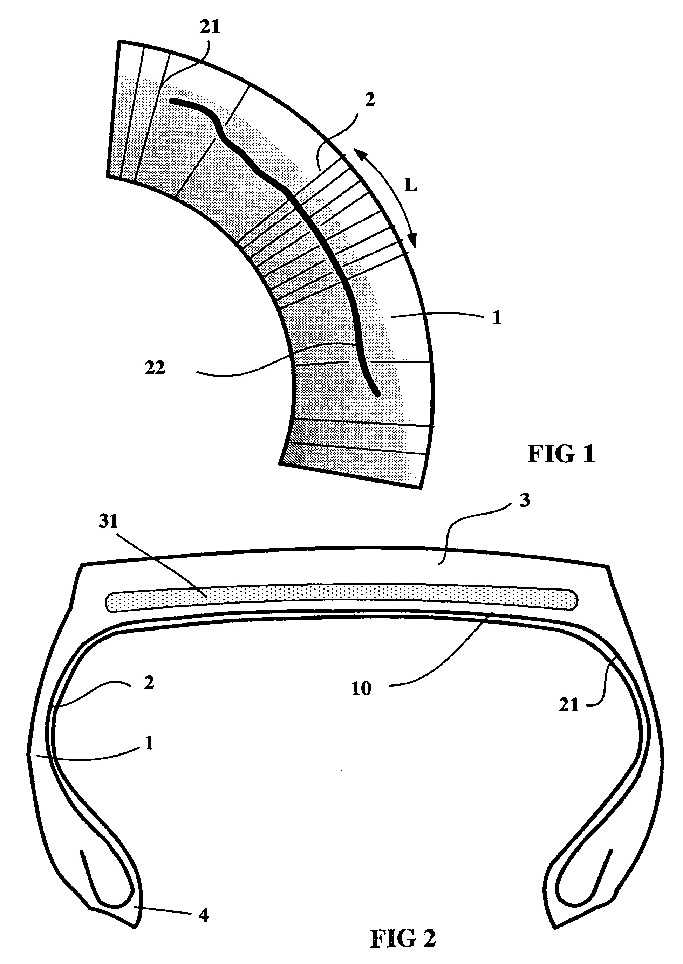

Le pneumatique 10 de dimension 315/80 R 22.5 montré en coupe méridienne sur la figure 2, c'est-à-dire dans un plan de coupe contenant l'axe de rotation du pneumatique, comprend des flancs 1 de part et d'autre d'un sommet 3, chaque flanc 1 se terminant par des bourrelets 4 destinés à être en contact avec une jante de montage (non représentée sur cette figure). Ce pneumatique est renforcé par une armature de carcasse 2 formée elle-même d'une pluralité de renforts 21 orientés de façon à faire un angle de 90 degrés avec la direction circonférentielle (direction qui est perpendiculaire au plan de la figure 2). Les renforts 21 de l'armature de carcasse sont des assemblages de 19 fils de 0.18 mm de diamètre dépourvus de frette autour desdits renforts. L'armature de carcasse s'étend dans le sommet 3 et est surmontée radialement à l'extérieur par une armature de sommet 31 ; l'armature de carcasse s'étend dans les flancs 1 et se termine par un ancrage dans les bourrelets 4.

Pour cette dimension de pneumatique, le volume de la cavité interne, c'est-à-dire le volume contenant la pression de gonflage, est de 140 litres.

La figure 1 montre partiellement un des flancs 1 du pneumatique représenté à la figure 2 après avoir subi un test d'éclatement. Ce test consiste, après avoir au préalable coupé des renforts 21 de carcasse sur une longueur circonférentielle L entre 30 à 80 mm (mesurée sensiblement au point axialement le plus à l'extérieur du pneumatique), à monter le pneumatique sur une roue et à gonfler ce pneumatique jusqu'à son éclatement. Au cours de ce test, on mesure la pression d'éclatement et la pression acoustique à une distance de 1 m du pneumatique. Après test, on mesure la longueur circonférentielle de l'ouverture 22 sur le flanc du pneumatique.

Dans le cas d'espèce, un pneumatique de dimension 315/80 R 22.5 pour lequel la zone coupée est de longueur circonférentielle L égale à 30 mm, la pression acoustique mesurée atteint une valeur de 4,5 bars pour une pression d'éclatement de 14 bars. La longueur circonférentielle de l'ouverture après éclatement est égale à 550 mm. Dans un autre cas d'espèce, d'un pneumatique de même dimension pour lequel la zone coupée est de longueur circonférentielle L égale à 80 mm, la pression acoustique mesurée atteint une valeur de 3,5 bars pour une pression d'éclatement de 9 bars. La longueur circonférentielle de l'ouverture après éclatement est égale à 450 mm.

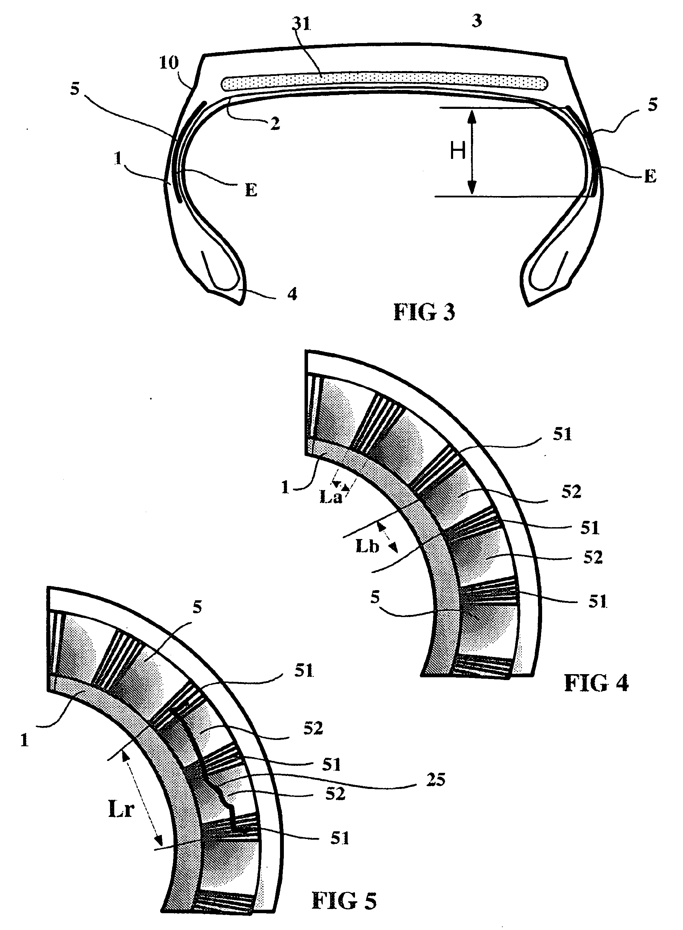

Selon une variante de pneumatique 10 selon l'invention montrée avec la figure 3, chaque flanc 1 comporte à l'extérieur de l'armature de carcasse une armature additionnelle 5. Cette armature additionnelle s'étend sur une distance radiale H, dans le plan de la figure 3, de part et d'autre du point E de l'armature de carcasse axialement le plus à l'extérieur lorsque le pneumatique est gonflé à sa pression nominale. Cette armature additionnelle se termine au voisinage de l'armature de sommet 31.

Sur la figure 4, on montre un flanc 1 du pneumatique 10 montré en coupe à la figure 3. L'armature additionnelle 5, visible sur la figure 4, est formée comme une nappe comprenant une succession de premières parties 51 de largeur La et de deuxièmes parties 52 de largeur Lb, ces parties étant disposées en alternance (une première partie 51 suit une deuxième partie 52). Les premières parties 51 et les deuxièmes parties 52 conservent sensiblement leurs largeurs respectives La, Lb au niveau des points radialement les plus à l'intérieur. Les premières parties 51 ont une résistance à la rupture lorsqu'elles sont soumises à un effort dans la direction des renforts qui est supérieure à la résistance à la rupture des deuxièmes parties 52 dans la même direction. Par résistance à la rupture, on entend la force à rupture en daN par unité de longueur en décimètre (dm) (la résistance à la rupture d'une armature renforcée de renforts est sensiblement égale à la force de rupture de chaque renfort multipliée par le nombre de renfort par décimètre).

Chaque première partie 51 de forte résistance à la rupture est constituée par un matériau de caoutchouc renforcé par des câbles parallèles entre eux. Les câbles sont disposés de manière à obtenir, à la fabrication de l'armature, 80 câbles par décimètre. Les câbles sont en Aramide 330*2 - 230/230 et ont une force à rupture unitaire de l'ordre de 100 daN.

Chaque première partie 51 est de largeur moyenne égale à 25 mm. Un décimètre de nappe comprend environ 80 renforts par décimètre (dm) ; ces parties A ont en conséquence une résistance à la rupture Fra égale à 8000 daN/dm.

Chaque deuxième partie 52, de largeur égale à 50 mm, est formée avec le même mélange de caoutchouc qui lie les renforts des premières parties 51 mais sans aucun renfort. La force de rupture des deuxièmes parties est très inférieure à celle des premières parties puisqu'elle est sensiblement égale à la force à rupture du mélange de caoutchouc, c'est-à-dire 20 daN/dm pour des niveaux d'épaisseur identiques.

Sur un flanc 1, on prépare le pneumatique pour le test d'éclatement décrit plus haut en coupant les renforts de l'armature de carcasse sur une longueur circonférentielle de 80 mm. Cette coupe est faite sur plusieurs pneumatiques de manière à être positionnée de plusieurs façons par rapport aux premières et deuxièmes parties de l'armature additionnelle 5.

La figure 5 montre un des résultats obtenus, la coupure préalable affectant une première partie 51 et partiellement deux deuxièmes parties 52. On constate après éclatement du pneumatique que l'ouverture 25 du flanc est de longueur circonférentielle Lr inférieure à 150 mm. On note en outre que la surpression au moment de l'éclatement passe de 10 bars pour un pneumatique de même dimension sans armature additionnelle à moins de 1 bar pour le pneumatique selon l'invention.

Préférentiellement, la résistance à la rupture des premières parties 51 est au moins égale à 3000 daN/dm et encore plus préférentiellement au moins égale à 5000 daN/dm pour un pneumatique destiné à équiper un véhicule poids lourd.

Préférentiellement, la résistance à la rupture des deuxièmes parties est au plus égale à 300 daN/dm et encore plus préférentiellement au plus égale à 100 daN/dm.

L'adaptation de l'invention à une dimension usuelle de pneumatique pour véhicule poids lourd est aisée pour la personne de métier, sachant que préférentiellement la largeur d'une partie de plus faible résistance à la rupture est comprise entre 20 et 60 mm et encore plus préférentiellement entre 30 et 40 mm.

En outre, pour les gammes usuelles de pneumatiques pour véhicules poids lourd, il est judicieux de choisir, en combinaison avec les valeurs de résistance à la rupture données plus haut, des valeurs de largeurs telles que la somme des largeurs d'une première partie et d'une deuxième partie est au moins égale à 40 mm et au plus égale à 80 mm ce qui permet d'obtenir, dans le test pratiqué consistant à couper une forte proportion de renforts de l'armature de carcasse sur une largeur L de 80 mm, une longueur d'ouverture du flanc à l'éclatement inférieure à 150 mm et ainsi de limiter la surpression à 1 mètre à une valeur inférieure à 1 bar.

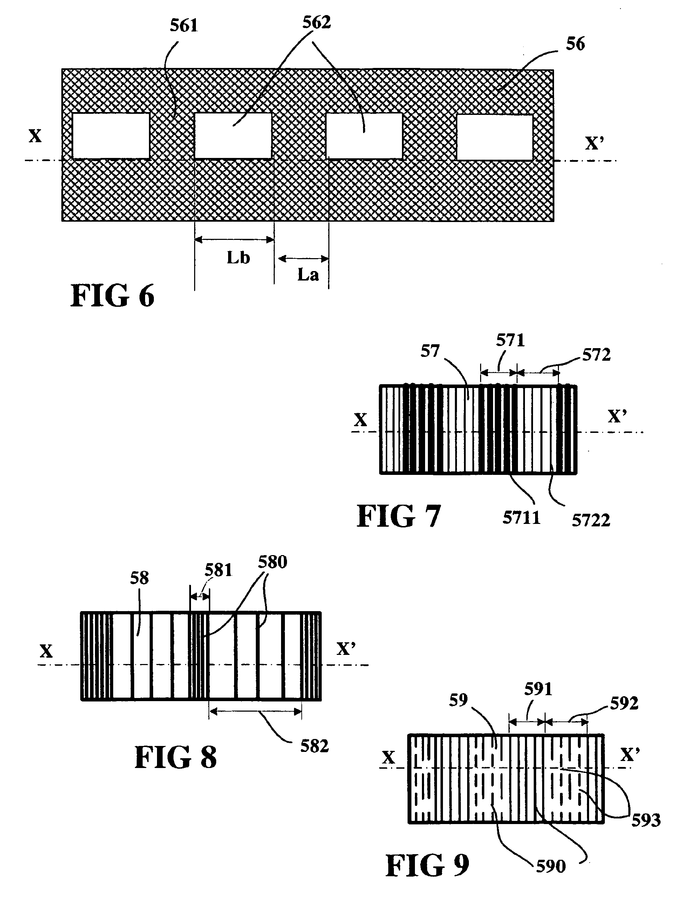

Les figures 6, 7, 8 et 9 montrent des variantes d'armature additionnelle pour la mise en oeuvre de l'invention.

L'armature additionnelle 56 montrée avec la figure 6 est formée dans une nappe de tissu croisé (fils de trame et de chaîne croisés), les fils le composant formant un angle de 45° avec la direction principale XX' de ladite armature. Une pluralité d'ouvertures 560 sont réalisées à l'emporte pièce dans ledit tissu de manière régulière dans la direction XX' du tissu qui est destinée à être posée circonférentiellement sur le pneumatique. Ainsi, on réalise des premières parties 561 de largeur La entre les ouvertures 560 et des deuxièmes parties 562 recouvrant lesdites ouvertures 560 de largeur Lb.

L'armature additionnelle 57 montrée à la figure 7, comprend une pluralité de premières parties 571 et de deuxièmes parties 572 disposées en alternance. Les premières parties 571 sont renforcées avec des renforts 5711 et les deuxièmes parties 572 avec des renforts 5722. Les renforts 5711 ont une force de rupture qui est supérieure à la force à rupture des renforts 5722. Le pas de pose des renforts est identique pour les premières et les deuxièmes parties.

L'armature additionnelle 58 montrée à la figure 8, comprend une pluralité de premières parties 581 et de deuxièmes parties 582 disposées en alternance dans la direction XX'. Les premières parties 581 et les deuxièmes parties 582 sont renforcées avec les mêmes renforts 580 qui sont posés avec des pas différents dans lesdites parties. Le pas de pose dans les deuxièmes parties 582 est très supérieur au pas de pose des renforts dans les premières parties 581.

L'armature additionnelle 59 montrée à la figure 9, comprend une pluralité de premières parties 591 et de deuxièmes parties 592 disposées en alternance. Les premières parties 591 et les deuxièmes parties 592 sont renforcées avec les mêmes renforts 590 qui sont posés avec des pas identiques dans lesdites parties. Avant incorporation de cette armature additionnelle dans un pneumatique, on réalise une pluralité de coupures 593 le long des renforts des deuxièmes parties 592 de manière à avoir une résistance à la rupture en traction dans le sens des renforts qui soit très inférieure à la résistance à la rupture des premières parties 591.

Avantageusement, le nombre de renforts de l'armature additionnelle par décimètre dans les premières parties est supérieur à 90 renforts, préférentiellement supérieur à 110 renforts. De même, la distance entre deux renforts est inférieure à 0.5 mm et préférentiellement inférieure ou égale à 0.3 mm.

Dans tous les exemples décrits, l'armature additionnelle peut être prolongée de part et d'autre des flancs jusqu'à aller sous ou sur l'armature de sommet et dans les bourrelets.

Le dispositif de l'invention est particulièrement intéressant lorsque le pneumatique dispose d'un volume de cavité interne important, associé à un niveau de pression de gonflage élevé, comme cela est le cas dans les pneumatiques pour véhicules poids lourd, avion, d'engins de travaux, agricole.

## Revendications

1. Pneumatique (10) comprenant une armature de carcasse radiale (2) surmontée radialement à l'extérieur par une armature de sommet (31), l'armature de carcasse (2) étant formée par une pluralité de renforts métalliques (21) enrobés dans un matériau d'enrobage en caoutchouc, les renforts (21) de l'armature de carcasse faisant un angle au moins supérieur à 75° avec la direction circonférentielle, le pneumatique comprenant en outre des bourrelets (4) pour être en contact avec une jante de montage, l'armature de carcasse (2) étant ancrée dans ces bourrelets, le pneumatique (10) comprenant deux flancs (1), chaque flanc (1) s'étendant entre un bourrelet (4) et le sommet (3), au moins l'un des flancs comprenant une armature additionnelle de renfort (5), ce pneumatique étant **caractérisé en ce que** l'armature additionnelle (5) comprend dans le sens circonférentiel une pluralité de premières parties (51) et de deuxièmes parties (52) ayant des résistances à la rupture, c'est-à-dire des forces à rupture par unité de largeur d'armature, telles que la résistance à la rupture des deuxièmes parties (52) est inférieure à la résistance à la rupture des premières parties, les premières parties (51) et les deuxièmes parties étant disposées en alternance dans la direction circonférentielle.

2. Pneumatique (10) selon la revendication 1 **caractérisée en ce que** l'armature additionnelle (5) s'étend dans l'un au moins des flancs au moins entre un point situé radialement à l'intérieur du point (E) axialement le plus à l'extérieur du profil de l'armature de carcasse du pneumatique monté sur sa jante de montage et gonflé à sa pression d'usage, et un point situé au voisinage de l'extrémité axiale de l'armature de sommet (31).

3. Pneumatique (10) selon la revendication 2 **caractérisée en ce que** l'armature additionnelle (5) est positionnée axialement et radialement à l'extérieur de l'armature de carcasse.

4. Pneumatique (10) selon l'une des revendications 1 à 3 **caractérisé en ce que** l'armature additionnelle (5) est pourvue dans ses premières parties avec une pluralité de renforts textiles disposés selon une direction faisant un angle égal à 90 degrés avec la direction circonférentielle sur le pneumatique.

5. Pneumatique selon l'une des revendications 1 à 4 **caractérisé en ce que** la résistance à la rupture des premières parties est au moins égale à 3000 daN/dm.

6. Pneumatique selon l'une des revendications 1 à 4 **caractérisé en ce que** la résistance à la rupture des deuxièmes parties est au plus égale à 300 daN/dm.

7. Pneumatique selon la revendication 4 **caractérisé en ce que** les renforts des premières parties de l'armature additionnelle (5) ayant une plus grande résistance à la rupture sont choisis parmi les renforts textiles de nature polyamide ou aramide ou des renforts hybrides formés avec au moins deux renforts textiles de natures différentes.

8. Pneumatique selon l'une des revendications 1 à 7 **caractérisé en ce que** les deuxièmes parties de l'armature additionnelle (5) comprennent une pluralité de renforts discontinus, ces renforts s'étendant dans une direction radiale.

## Claims

1. Tyre (1) comprising a radial carcass reinforcement (2) surmounted radially on the outside by a crown reinforcement (31), the carcass reinforcement (2) being formed of a plurality of metal reinforcing elements (21) coated in a rubber coating material, the reinforcing elements (21) of the carcass reinforcement making an angle at least greater than 75° with the circumferential direction, the tyre further comprising beads (4) to be in contact with a mounting rim, the carcass reinforcement (2) being anchored in these beads, the tyre (10) comprising two sidewalls (1), each sidewall (1) extending between a bead (4) and the crown (3), at least one of the sidewalls comprising an additional reinforcing reinforcement (5), this tyre being **characterized in that** the additional reinforcement (5) comprises, in the circumferential direction, a plurality of first parts (51) and of second parts (52) that have rupture strengths, that is to say, forces that rupture per unit width of reinforcement, that are such that the rupture strength of the two parts (52) is lower than the rupture strength of the first parts, the first parts (51) and the second parts being arranged such that they alternate in the circumferential direction.

2. Tyre (10) according to Claim 1, **characterized in that** the additional reinforcement (5) extends in at least one of the sidewalls at least between a point situated radially on the inside of the axially outermost point (E) of the profile of the carcass reinforcement of the tyre mounted on its mounting rim and inflated to its working pressure, and a point situated in the vicinity of the axial end of the crown reinforcement (31).

3. Tyre (10) according to Claim 2, **characterized in that** the additional reinforcement (5) is positioned axially and radially on the outside of the carcass reinforcement.

4. Tyre (10) according to one of Claims 1 to 3, **characterized in that** the additional reinforcement (5) is provided in its first parts with a plurality of textile reinforcing elements arranged in a direction that makes an angle equal to 90 degrees with the circumferential direction on the tyre.

5. Tyre according to one of Claims 1 to 4, **characterized in that** the rupture strength of the first parts is at least equal to 3000 daN/dm.

6. Tyre according to one of Claims 1 to 4, **characterized in that** the rupture strength of the second parts is at most equal to 300 daN/dm.

7. Tyre according to Claim 4, **characterized in that** the reinforcing elements of the first parts of the additional reinforcement (5) that have a greater rupture strength are chosen from textile reinforcing elements of the polyamide or aramid kind, or hybrid reinforcing elements formed with at least two textile reinforcing elements of different kinds.

8. Tyre according to one of Claims 1 to 7, **characterized in that** the second parts of the additional reinforcement (5) comprise a plurality of discontinuous reinforcing elements, these reinforcing elements running in a radial direction.

## Patentansprüche

1. Luftreifen (10) mit einer radialen Karkassenbewehrung (2), über der radial außen eine Scheitelbewehrung (31) angeordnet ist, wobei die Karkassenbewehrung (2) von mehreren metallischen Verstärkungen (21) geformt wird, die mit einem Umhüllungsmaterial aus Kautschuk umhüllt sind, wobei die Verstärkungen (21) der Karkassenbewehrung einen Winkel von mindestens größer als 75° mit der Umfangsrichtung bilden, wobei der Luftreifen außerdem Wülste (4) enthält, um mit einer Montagefelge in Kontakt zu sein, wobei die Karkassenbewehrung (2) in diesen Wülsten verankert ist, wobei der Luftreifen (10) zwei Flanken (1) aufweist, wobei jede Flanke (1) sich zwischen einem Wulst (4) und dem Scheitel (3) erstreckt, wobei mindestens eine der Flanken eine zusätzliche Verstärkungsbewehrung (5) aufweist, wobei dieser Luftreifen **dadurch gekennzeichnet ist, dass** die zusätzliche Bewehrung (5) in Umfangsrichtung mehrere erste Bereiche (51) und zweite Bereiche (52) mit derartigen Bruchfestigkeiten, d.h. mit Bruchkräften pro Bewehrungsbreiteneinheit, aufweist, dass die Bruchfestigkeit der zweiten Bereiche (52) geringer ist als die Bruchfestigkeit der ersten Bereiche, wobei die ersten Bereiche (51) und die zweiten Bereiche abwechselnd in Umfangsrichtung angeordnet sind.

2. Luftreifen (10) nach Anspruch 1, **dadurch gekennzeichnet, dass** die zusätzliche Bewehrung (5) sich in mindestens einer der Flanken mindestens zwischen einem Punkt, der sich radial innen bezüglich des axial am weitesten außen liegenden Punkts (E) des Profils der Karkassenbewehrung des auf seine Montagefelge montierten und auf seinen Betriebsdruck aufgepumpten Luftreifens befindet, und einem Punkt erstreckt, der sich in der Nähe des axialen Endes der Scheitelbewehrung (31) befindet.

3. Luftreifen (10) nach Anspruch 2, **dadurch gekennzeichnet, dass** die zusätzliche Bewehrung (5) axial und radial außerhalb der Karkassenbewehrung positioniert ist.

4. Luftreifen (10) nach einem der Ansprüche 1 bis 3, **dadurch gekennzeichnet, dass** die zusätzliche Bewehrung (5) in ihren ersten Bereichen mit mehreren Textilverstärkungen versehen ist, die gemäß einer Richtung angeordnet sind, die einen Winkel gleich 90 Grad mit der Umfangsrichtung auf dem Luftreifen bildet.

5. Luftreifen nach einem der Ansprüche 1 bis 4, **dadurch gekennzeichnet, dass** die Bruchfestigkeit der ersten Bereiche mindestens gleich 3000 daN/dm ist.

6. Luftreifen nach einem der Ansprüche 1 bis 4, **dadurch gekennzeichnet, dass** die Bruchfestigkeit der zweiten Bereiche höchstens gleich 300 daN/dm ist.

7. Luftreifen nach Anspruch 4, **dadurch gekennzeichnet, dass** die Verstärkungen der ersten Bereiche der zusätzlichen Bewehrung (5) mit größerer Bruchfestigkeit aus den Textilverstärkungen mit Polyamid- oder Aramid-Beschaffenheit oder hybriden Verstärkungen ausgewählt werden, die mit mindestens zwei Textilverstärkungen unterschiedlicher Beschaffenheit geformt werden.

8. Luftreifen nach einem der Ansprüche 1 bis 7, **dadurch gekennzeichnet, dass** die zweiten Bereiche der zusätzlichen Bewehrung (5) mehrere unterbrochene Verstärkungen enthalten, die sich in einer radialen Richtung erstrecken.
